# EUROPEAN PATENT APPLICATION

(11) **EP 3 561 642 A1**
(43) Date of publication of application: **30.10.2019**
(21) Application number: 17885018.6
(22) Date of filing: 08.11.2017
(51) Int. Cl.: G06F 3/01

(54) **INFORMATION PROCESSING DEVICE AND METHOD FOR CONTROL THEREOF**

(30) Priority: 22.12.2016 JP 2016248786
(71) Applicant: Sony Corporation, Tokyo 108-0075 (JP)
(72) Inventor: KOYAMA, Yuichiro, Tokyo 108-0075 (JP); SEKIYA, Toshiyuki, Tokyo 108-0075 (JP); SAWATA, Ryosuke, Tokyo 108-0075 (JP)
(74) Representative: 2SPL Patentanwälte PartG mbB
(86) International application number: PCT/JP2017/040237
(87) International publication number: WO 2018/116678

(57) **Abstract**

To provide an information processing device that is used by being worn on a user's body and executes a response operation with respect to the user's input operation, and a method of controlling the information processing device.

An information processing device includes: a housing which is worn by a user; a detection unit which detects an operation performed on the housing; and a control unit which controls a response operation with respect to a result of the detection. The detection unit detects one or two or more of a deformation operation for the housing, an operation of touching the housing, an operation of grasping at least one of right and left tip portions of the U-shaped housing, an operation of tracing the surface of the housing, an operation of shifting a wearing position of the housing, and the like.

## Description

### Technical Field

The technology disclosed in the present specification relates to an information processing device executing a response operation to a user's input operation and a method of controlling the information processing device, and more particularly, to an information processing device used by being worn by a user and a method of controlling the information processing device.

### Background Art

In recent years, wearable devices used by being worn on various locations on users' bodies have become widespread. Wearable devices have been used to detect biological information, positional information, and states of other users, to perform recording such as imaging or sound recording of surrounding conditions of users, and to present various pieces of information to users by voice or the like. Wearable devices have been used in various fields, for example, the fields of life logs and athletic support.

For example, a neck band type wearable device which is a wearing unit that surrounds half of a user's neck from both the right and left sides of the neck to the rear side (back side) and that is worn around the user's neck has been proposed (see, for example, Patent Literature 1).

Such a type of wearable device includes an operation unit on which a touch operation and a slide operation can be performed so that a user can perform an input operation. In addition, it is also possible to configure a wearable device to which a voice can be input using voice recognition. The user can give various instructions such as imaging, starting or stopping recording, starting or stopping voice reproduction, and requesting or stopping information presentation to the wearable device through an input operation and a voice input using the operation unit.

### Citation List

### Patent Literature

Patent Literature 1: WO2016/063587

### Disclosure of Invention

### Technical Problem

An object of the technology disclosed in the present specification is to provide an excellent information processing device used by being worn on a user's body and capable of suitably executing a response operation with respect to the user's input operation, and a method of controlling the information processing device.

### Solution to Problem

The technology disclosed herein has been devised in light of the problem described above, a first aspect thereof is an information processing device including: a housing which is worn by a user; a detection unit which detects an operation performed on the housing; and a control unit which controls a response operation with respect to a result of the detection.

The detection unit detects one or two or more of a deformation operation of the housing, an operation of touching the housing, an operation of grasping at least one of right and left tip portions of the U-shaped housing, an operation of tracing the surface of the housing, an operation of shifting a wearing position of the housing, a rotation operation or a pressing operation for operators capable of performing a rotation operation or a pressing operation and disposed at the right and left tip portions of the U-shaped housing, and extension and contraction operations of the right and left tip portions of the opening of the U-shaped housing.

In addition, a second aspect of the technology disclosed herein is a method of controlling an information processing device, the method including: a detection step of detecting an operation performed on a housing of the information processing device worn by a user; and a control step of controlling a response operation of the information processing device with respect to a result of the detection.

### Advantageous Effects of Invention

According to the technology disclosed in the present specification, it is possible to provide an excellent information processing device used by being worn on a user's body and capable of suitably executing a response operation with respect to the user's input operation, and a method of controlling the information processing device.

Note that the effects described in the present specification are merely examples, and effects of the present invention are not limited to these. Further, there is also a case where the present invention further provides additional effects other than the above-described effects.

Other objects, features and advantages of the technology disclosed in the present specification will become more clear from the detailed description based on an embodiment which will be described later and the accompanying drawings.

### Brief Description of Drawings

FIG. 1 is a diagram illustrating an appearance configuration example of a neck band type information processing device 100.
FIG. 2 is a diagram illustrating a configuration example of a tip portion of a housing 101 of the information processing device 100.
FIG. 3 is a diagram illustrating an appearance configuration example of a neck band type information processing device 300.
FIG. 4 is a diagram illustrating an appearance configuration example of a neck band type information processing device 400.
FIG. 5 is a diagram illustrating a state where a neck band type housing 501 is worn on a user's neck.
FIG. 6 is a diagram illustrating an appearance configuration example of a neck band type information processing device 600.
FIG. 7 is a diagram illustrating an appearance configuration example of a neck band type information processing device 700.
FIG. 8 is a diagram illustrating an appearance configuration example of a neck band type information processing device 800.
FIG. 9 is a block diagram illustrating an internal configuration example of the neck band type information processing device 100.
FIG. 10 is a diagram illustrating an operation of a user deforming a housing of an information processing device.
FIG. 11 is a diagram illustrating an operation of a user deforming a housing of an information processing device.
FIG. 12 is a diagram illustrating an operation of a user touching a housing of an information processing device.
FIG. 13 is a diagram illustrating an operation of a user touching a housing of an information processing device.
FIG. 14 is a diagram illustrating an operation of a user grasping a housing of an information processing device.
FIG. 15 is a diagram illustrating an operation of a user grasping a housing of an information processing device.
FIG. 16 is a diagram illustrating an operation of a user tracing the surface of a housing of an information processing device.
FIG. 17 is a diagram illustrating an operation of a user tracing the surface of a housing of an information processing device.
FIG. 18 is a diagram illustrating an operation of a user shifting a wearing position of a housing of an information processing device.
FIG. 19 is a diagram illustrating an operation of a user shifting a wearing position of a housing of an information processing device.
FIG. 20 is a diagram illustrating an operation performed on an operator of an information processing device by a user.
FIG. 21 is a diagram illustrating an operation of a user extending and contracting a tip portion of a housing of an information processing device.
FIG. 22 is a diagram schematically illustrating a relationship between a user's input operation and a response operation using an information processing device.

### Mode(s) for Carrying Out the Invention

Hereinafter, an embodiment of the technology disclosed in the present specification will be described in detail with reference to the accompanying drawings.

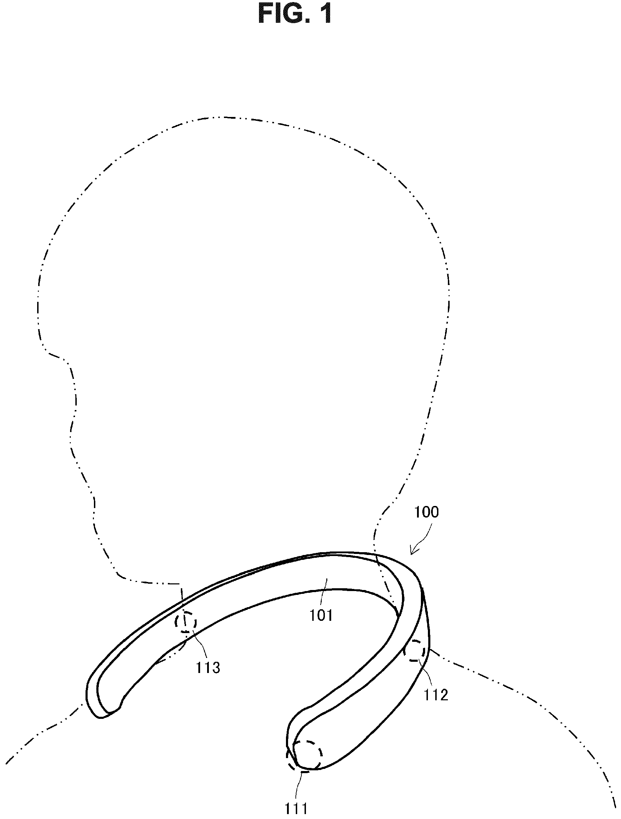

FIG. 1 illustrates an appearance configuration example of an information processing device 100. The information processing device 100 includes a ring-shaped (in other words, headband-shaped or U-shaped) housing 101 that is partially open. As illustrated in the drawing, the information processing device 100 is worn by a user in a state where the housing 101 is worn on the user's neck to surround half of the neck from both the right and left sides of the neck to the rear side (back side), a U-shaped opening portion faces forward, and at least a portion of the inner surface of a ring-shaped portion of the housing 101 is in contact with a portion of the user's neck, and thus the information processing device 100 is used as a neck band type wearable device. Considering operability when a user wears the housing 101 on his or her own neck and operability of the user's input due to the deformation of the housing 101 (to be described later), it is preferable that at least a portion (for example, a U-shaped bottom) of the housing 101 be formed of an elastic material, that the U-shape be bendable, and that the opening have an extensible width. The information processing device 100 can be used in various fields such as the fields of life logs and athletic support, for example, as a neck band type wearable device.

Naturally, a user can also use the information processing device 100 by attaching the housing 101 to any area of the body other than the neck. Alternatively, it is also possible to use the information processing device 100 by the same method as a normal information terminal by disposing it on, for example, a desk without the housing 101 being worn on a user's body.

The information processing device 100 includes a sound collecting unit such as a so-called microphone, and the sound collecting unit collects target sounds uttered by the user wearing the device as sound information. For example, sound collecting units 111 to 113 may be disposed at a plurality of locations on the housing 101 such as the tip portion of the housing 101 and near the right and left of the face of the user wearing the housing 101 on his or her own neck.

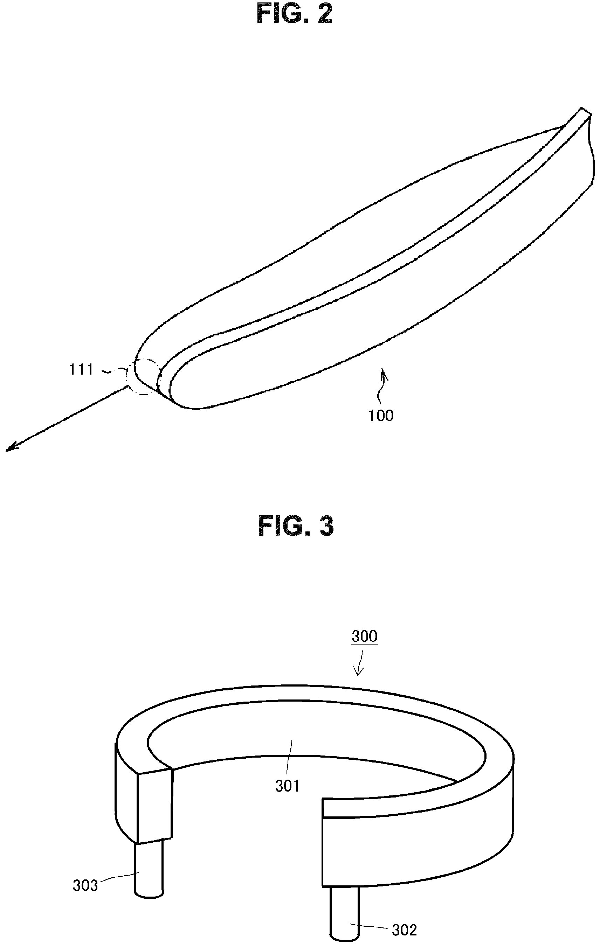

FIG. 2 illustrates a configuration example of the tip portion of the housing 101 to which the sound collecting unit 111 is attached. The tip portion has a streamline shape in which the sound collecting unit 111 protrudes toward the front of a user in the vicinity of the mouth of the user wearing the housing 101 on his or her own neck. For example, the sound collecting unit 111 is disposed at the streamlined tip to face in a protrusion direction. At least one sound collecting unit 111 is installed at a distal end portion of the U-shaped housing 101 as a countermeasure against wind noise.

In addition, although not shown in the drawing, an imaging unit is disposed at the other tip (not shown in FIG. 2) of the U-shaped housing 101. The imaging unit is built into the other tip so that the front side of a user wearing the housing 101 on his or her own neck is set to be a visual line direction. In addition, a pinhole lens (not shown) for the imaging unit is bored in the front surface of the other tip of the housing 101, so that it is possible to image a speaking partner of the user wearing the housing 101 or the scenery in front of the user. The imaging unit is installed at the distal end portion of the U-shaped housing 101, and thus it becomes easier to image a subject on the front side. In addition, one or more other imaging units may be further installed at areas other than the tip of the housing 101.

Meanwhile, at least some of the sound collecting units 111 to 113 in the vicinity of the mouth of the user and the imaging unit can also be configured as external devices of the information processing device 100 which are separated from the housing 101, but it will be assumed in the following description that the sound collecting units 111 to 113 and the imaging unit are supported by the housing 101.

Referring back to FIG. 1, the left and right sound collecting units 112 and 113 are disposed to face in different directions toward the outside of the housing 101 (that is, in directions opposite to the center of the ring). More specifically, when the housing 101 is worn on the user's neck, the sound collecting units 112 and 113 are disposed at positions which are substantially bilaterally symmetrical to each other with respect to the user's neck.

The information processing device 100 can recognize the user's utterance by analyzing the user's voice (sound information) collected by the sound collecting units 111 to 113 by performing analysis based on a voice recognition technique or a natural language processing technique. For example, the information processing device 10 may recognize instruction content from the user's utterance and execute various processes (applications) in accordance with results of the recognition.

Meanwhile, it is assumed that the information processing device 100 is used outdoors as a wearable device carried by a user. In other words, the information processing device 100 is used in an environment where various types of noises such as wind noise, noise accompanying vibration, and rustling accompanying the wearing of the device 100 are generated randomly. It is possible to extract a user's voices with high sensitivity even under a random noise environment by disposing the plurality of sound collecting units 111 to 113 at appropriate locations and performing a beam forming process on voice signals collected by the sound collecting units 111 to 113. However, details of the beam forming process will not be described.

FIG. 3 illustrates an appearance configuration example of another neck band type information processing device 300. A housing 301 of the information processing device 300 has a partially opened ring shape (in other words, a headband shape or a U-shape) similar to the information processing device 100 illustrated in FIG. 1. A user can wear the information processing device 300 in a state where the housing 301 is worn on his or her own neck to surround half of the neck from both the right and left sides of the neck to the rear side (back side), a U-shaped opening portion faces forward, and at least a portion of the inner surface of a ring-shaped portion of the housing 301 is in contact with a portion of the user's neck. In addition, although not shown in the drawing, it is assumed that the housing 301 of the information processing device 300 supports a plurality of sound collecting units and one or more imaging units. Considering operability when a user wears the housing 301 on his or her own neck and operability of the user's input due to the deformation of the housing 301 (to be described later), it is preferable that at least a portion (for example, a U-shaped bottom) of the housing 301 be formed of an elastic material, that the U-shape be bendable, and that the opening have an extensible width (the same as above).

In the information processing device 300, a pair of protrusion portions 302 and 303 protrude in the vicinity of the opening of the housing 301, that is, under the right and left tip portions. When the housing 301 is worn on the user's neck, the tips of the protrusion portions 302 and 303 abut against the vicinity of the user's collarbone. Therefore, it is possible to set an angle θ at which a plane formed by the ring of the housing 301 is inclined to a horizontal direction to a desired value by setting the protrusion portions 302 and 303 to appropriate lengths. That is, the protrusion portions 302 and 303 play a role of adjusting the inclination of the housing 301 in a state in which the user wears the housing 301 on his or her own neck.

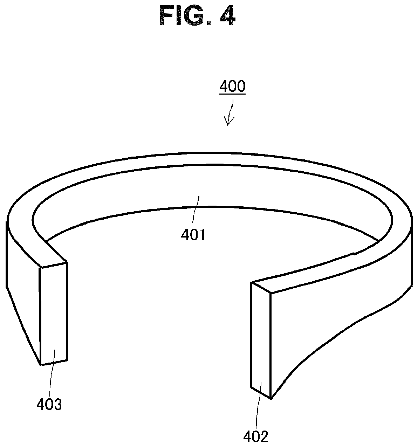

In addition, FIG. 4 illustrates an appearance configuration example of still another neck band type information processing device 400. A housing 401 of the information processing device 400 has a partially opened ring shape (in other words, a headband shape or a U-shape) similar to the information processing device 100 illustrated in FIG. 1. A user can wear the information processing device 400 in a state where the housing 401 is worn on his or her own neck to surround half of the neck from both the right and left sides of the neck to the rear side (back side), a U-shaped opening portion faces forward, and at least a portion of the inner surface of a ring-shaped portion of the housing 401 is in contact with a portion of the user's neck. In addition, although not shown in the drawing, it is assumed that the housing 401 of the information processing device 400 also supports a plurality of sound collecting units and one or more imaging units. Considering operability when a user wears the housing 401 on his or her own neck and operability of the user's input due to the deformation of the housing 401 (to be described later), it is preferable that at least a portion (for example, a U-shaped bottom) of the housing 401 be formed of an elastic material, that the U-shape be bendable, and that the opening have an extensible width (the same as above).

In the information processing device 400, inclination adjustment portions 402 and 403 having a width that increases toward the front side are disposed in the vicinity of the opening of the housing 401, that is, at the right and left tip portions. When the housing 401 is worn on the user's neck, lower edges of the inclination adjustment portions 402 and 403 abut against the vicinity of the user's collarbone. Therefore, it is possible to set an angle θ at which a plane formed by the ring of the housing 401 is inclined to a horizontal direction to a desired value by setting the inclination adjustment portions 402 and 403 to appropriate widths.

When a beam forming process (described above) is performed on voice signals collected by the plurality of sound collecting units disposed on the neck band type housing, it is possible to optimize the process as long as it is possible to estimate the position of the mouth of the user serving as a sound source with a high level of accuracy.

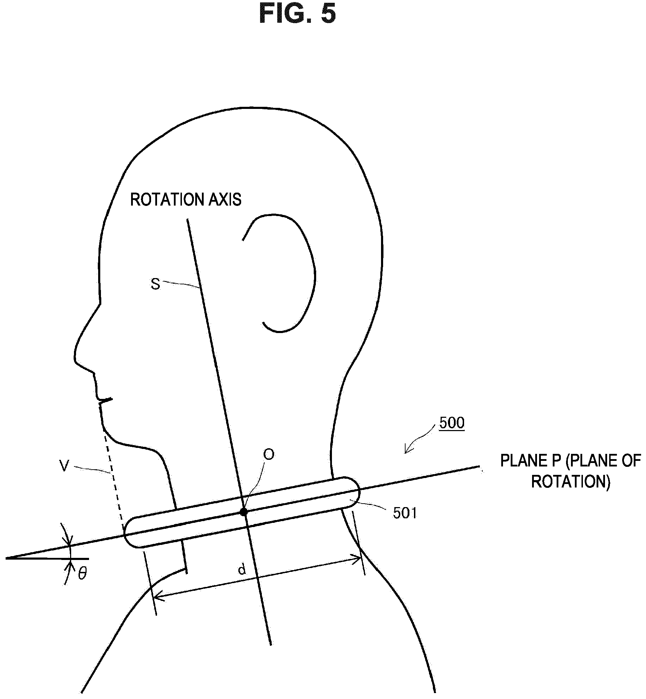

FIG. 5 illustrates a state where a neck band type housing 501 is worn on a user's neck. Here, the housing 501 is assumed to be the housings 301 and 401 of the above-described information processing devices 300 and 400. In the drawing, a circle formed by a ring of the housing 501 is defined as C, the center of the circle C is defined as O, and the rotation axis of the circle C is defined as S. Geometrically, it can be understood that the rotation axis S is at right angles to a plane (plane of rotation) P formed by the ring of the housing 501.

A perpendicular line V descending from the user's mouth to the plane P intersects the circle C formed by the ring of the housing 501 by appropriately selecting an angle θ at which the plane P formed by the ring of the housing 501 is inclined to a horizontal direction and a diameter d of the housing 501. By forming such a geometric relationship, the perpendicular line V and the circle C intersect each other regardless of the degree of a wearing deviation of the housing 501, and thus it is possible to maintain high accuracy of the beam forming process. Therefore, the information processing devices 300 and 400 illustrated in FIGS. 3 and 4 can also be referred to as configuration examples of the housings 301 and 401 that can be worn on a user's neck at an appropriate angle θ.

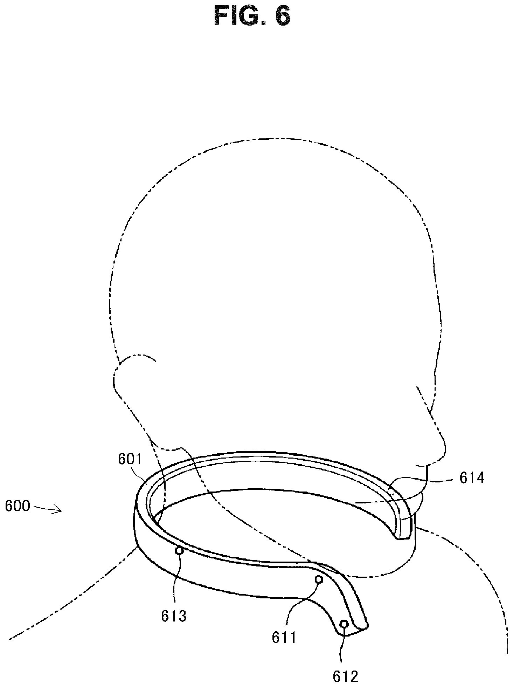

FIG. 6 illustrates an appearance configuration example of still another neck band type information processing device 600. A housing 601 of the information processing device 600 has a partially opened ring shape (in other words, a headband shape or a U-shape) similar to the information processing device 100 illustrated in FIG. 1. A user can wear the information processing device 600 in a state where the housing 601 is worn on his or her own neck to surround half of the neck from both the right and left sides of the neck to the rear side (back side), a U-shaped opening portion faces forward, and at least a portion of the inner surface of a ring-shaped portion of the housing 601 is in contact with a portion of the user's neck. In addition, considering operability when a user wears the housing 601 on his or her own neck and operability of the user's input due to the deformation of the housing 601 (to be described later), it is preferable that at least a portion (for example, a U-shaped bottom) of the housing 601 be formed of an elastic material, that the U-shape be bendable, and that the opening have an extensible width (the same as above).

Here, unlike the information processing devices 100, 300, and 400 illustrated in FIGS. 1, 3, and 4, the housing 601 of the information processing device 600 has an asymmetrical shape in which only a right tip in the opening is bent downward in substantially an L shape.

In the housing 601 of the information processing device 600, sound collecting units 611, 612, 613, and 614 such as so-called microphones are disposed at the above-described L-shaped bent portion and the above-described L-shaped tip portion, in the vicinity of the face of the user wearing the housing 601 on his or her own neck, and in the vicinity of the left tip of the housing 601. In addition, although not shown in the drawing, the housing 601 of the information processing device 600 also supports one or more imaging units, so that it is possible to image the front side of the user wearing the housing 601 and the surrounding scenery.

Here, additionally, the disposition of the plurality of sound collecting units 611, 612, 613, and 614 has the following effects (A) to (D) (see, for example, Patent Literature 1).

(A) Since the sound collecting units 611 and 612 are linearly disposed in the direction of the mouth of a user uttering a target sound, it is possible to efficiently emphasize the user's voice through a beam forming process.
(B) Since the sound collecting units 611 and 612 are linearly disposed in the direction of the ground that noise desired to be reduced reaches, it is possible to efficiently suppress noise through a beam forming process.
(C) Since the plurality of sound collecting units 611 to 614 are sterically disposed, it is possible to suppress noise reaching from all directions through a beam forming process.
(D) Since the sound collecting unit 611 is disposed closest to the mouth of a user wearing the housing 601, it is possible to acquire a voice uttered by the user with a larger volume than other noises.

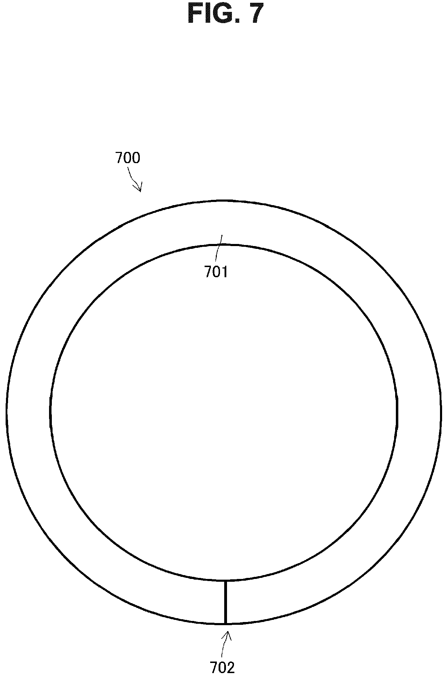

In addition, FIG. 7 illustrates an appearance configuration example of still another neck band type information processing device 700. A housing 701 has a closed ring shape (In other words, an O shape) with no opening, unlike the above-described information processing device 100 and the like. In addition, although not shown in the drawing, it is assumed that the housing 701 of the information processing device 700 also supports a plurality of sound collecting units and one or more imaging units. However, the housing 701 is constituted by a flexible member in at least a portion thereof, and includes a cut portion 702 in which the ring is cut at one location. Therefore, a user can wear the information processing device having the housing 701 worn around his or her own neck by opening the cut portion 702 while holding both right and left ends of the cut portion 702, such that it fully surrounds the user's neck from both the right and left sides of the neck to the rear side (back side). When the wearing operation is terminated and a hand is released from both right and left ends of the cut portion 702, the housing 701 returns to the original closed ring shape. That is, the housing 701 does not have an opening in a state where the user wears the information processing device on his or her own neck, and thus there is no concern that the information processing device may fall off or drop off from the neck even during movement or exercise of the user.

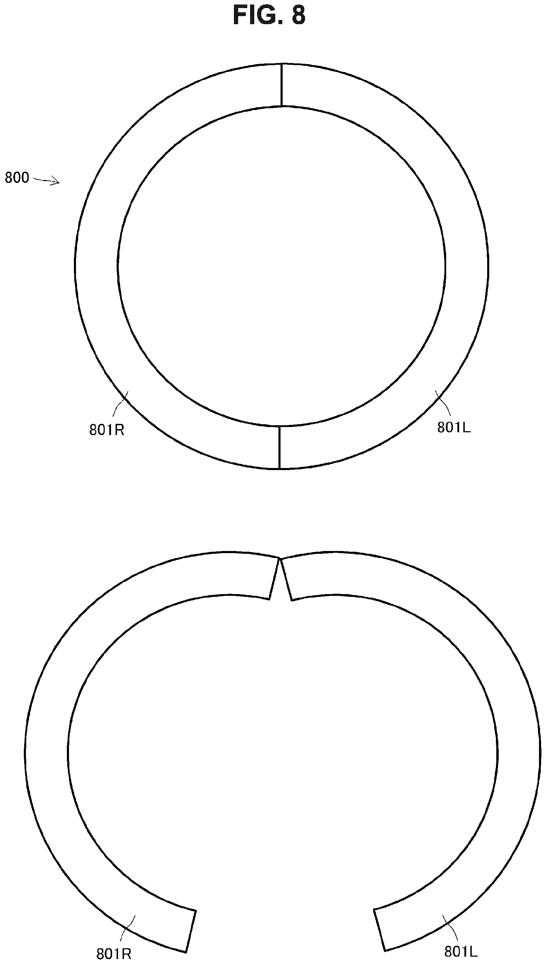

In addition, FIG. 8 illustrates an appearance configuration example of still another neck band type information processing device 800. A housing of the information processing device 800 may have any one of a partially opened ring shape or a closed ring shape, but is different from those of the above-described information processing device 100 and the like in that the housing has a detachable structure that can be separated into a housing left portion 801L and a housing right portion 801R. In addition, the housing left portion 801L and the housing right portion 801R may be connected to be rotatable by at least one bonding portion. A user can reasonably wear the information processing device by holding his or her own neck between the housing left portion 801L and the housing right portion 801 separated from each other or opening the housing left portion 801L and the housing right portion 801R by the bonding portion to put his or her own neck into the housing 801 and then closing the housing left portion 801L and the housing right portion 801R. In addition, the user wears the information processing device having the housing 801 worn on his or her own neck by fully surrounding the user's neck from both the right and left sides of the neck to the rear side (back side), and thus there is no concern that the information processing device may fall off or drop off from the neck even during movement or exercise of the user. In addition, although not shown in the drawing, it is assumed that the housings 801L and 801R of the information processing device 800 also support a plurality of sound collecting units and one or more imaging units.

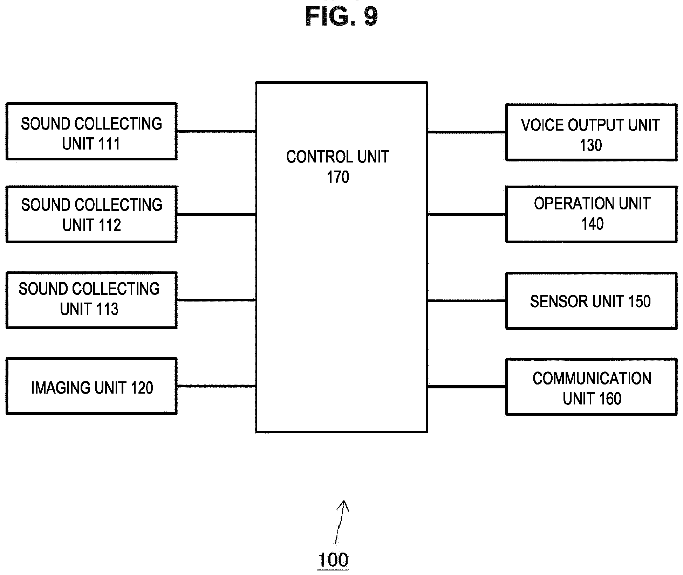

FIG. 9 illustrates an internal configuration example of the neck band type information processing device 100. It should be understood that the other information processing devices 300 and 400 and the like also include the same internal configuration.

The information processing device 100 illustrated in the drawing includes the plurality of sound collecting units 111 to 113, an imaging unit 120, a voice output unit 130, an operation unit 140, a sensor unit 150, a communication unit 160, and a control unit 170. Meanwhile, although not shown in FIG. 9, the information processing device 100 may include a built-in large-capacity memory constituted by a solid state drive (SSD) or may be externally connected thereto.

The sound collecting units 111 to 113 acquire voice data, such as a voice uttered by a user wearing the housing 101 of the information processing device 100 on his or her own neck or a surrounding voice, for a beam forming process. Each of the sound collecting units 111 to 113 is constituted by, for example, a microphone. Here, the microphone may be a microphone having sensitivity in all directions (or a semi-directional microphone) instead of a directional microphone. Having sensitivity in all directions means that there is no insensitive region (direction) in a polar pattern. The sound collecting units 111 to 113 may include a microphone amplifier circuit that amplifies an obtained voice signal and an A/D converter that converts a signal into a digital signal. The sound collecting units 111 to 113 output the acquired voice data to the control unit 170.

The imaging unit 120 includes a lens system which is constituted by an imaging lens, an aperture, a zoom lens, a focus lens, and the like, a driving system that causes the lens system to perform a focus operation and a zoom operation, an imaging element that performs photoelectric conversion of imaging light obtained by the lens system to generate an imaging signal, and the like (none of which is shown). The imaging element is constituted by, for example, a charge coupled device (CCD) sensor array or a complementary metal oxide semiconductor (CMOS) sensor array. The imaging unit 120 is disposed at a location where the front side of the user can be imaged in a state where the housing 101 of the information processing device 100 is worn on the user's neck, and the optical axis of a lens is directed. In this case, the imaging unit 120 can image, for example, a speaking partner who is in front of the user. Alternatively, the imaging unit 120 may be disposed at a location where the face of the user himself or herself can be imaged in a state where the housing 101 of the information processing device 100 is worn on the user's neck. The imaging unit 120 may automatically perform an imaging operation in accordance with the occurrence of an event such as the start of conversation between the user and a speaking partner, or may start or stop an imaging operation in accordance with an instruction input by the user. The imaging unit 120 outputs digitalized image data to the control unit 170.

The voice output unit 130 is constituted by a speaker or the like, and for example, reproduces and outputs music during jogging of a user wearing the housing 101 of the information processing device 100 on his or her own neck or sends appropriate voice guidance when the user comes to a point of interest (POI). In addition, the voice output unit 130 may be constituted by, for example, a stereo type speaker and may localize a sound image.

The operation unit 140 can be operated by a user using a fingertip and has a function of receiving an input from the user. The operation unit 140 is constituted by a mechanical operator such as a button and a switch, a knob, or a slider, a touch sensor on which a fingertip operation such as tapping, swiping, flicking, or pinch-out can be performed, or the like. The user can give an instruction for turning on or turning off the power supply of the information processing device 100, starting or terminating imaging of the imaging unit 120, starting or terminating input of voices from the sound collecting units 111 to 113, starting or terminating output of voice information from the voice output unit 130, and the like through the operation unit 140. Meanwhile, in the technology disclosed in the present specification, a user can easily or intuitively perform an input operation by generating a predetermined event with respect to the sound collecting units 111 to 113, the imaging unit 120, the sensor unit 15, or the like without using the operation unit 140 (or using the operation unit 140 in combination), and details thereof will be described later.

The sensor unit 150 has various functions of detecting the state of a user wearing the housing 101 of the information processing device 100 on his or her own neck and the surrounding state of the user. The sensor unit 150 includes at least one sensor module among, for example, an acceleration sensor, a speed sensor, a gyro sensor, a geomagnetic sensor, a global positioning system (GPS) sensor, and a vibration sensor. In addition, all of the sensor modules constituting the sensor unit 150 are not required to be accommodated in the housing 101, and it is also possible to constitute at least some of them as a device externally connected to the information processing device 100 separated from the housing 101. For example, a wristband type pulsation sensor worn on a user's wrist or a vibration sensor built into a smartphone carried by a user may be utilized as a portion of the sensor unit 150. Meanwhile, the sensor unit 150 may include a biological sensor that acquires a user's biological information such as body temperature, pulsation, myoelectric potential, and perspiration.

The communication unit 160 is a communication module for the information processing device 100 to transmit and receive data to and from an external device in a wired or wireless manner or an input and output interface module for the information processing device 100 to input and output data to and from an external device. The communication unit 160 performs data communication with an external device directly or via an access point on a network in accordance with a wired local area network (LAN) such as Ethernet (registered trademark), a wireless LAN such as wireless fidelity (Wi-Fi) (registered trademark), Bluetooth (registered trademark) communication, near field communication (NFC), infrared communication such as IrDA, or other communication methods. The communication unit 160 wirelessly transmits voices collected by the sound collecting units 111 to 113 (or voice data further subjected to a beam forming process by the control unit 170 or voice recognition results) or image data such as a still image or a moving image captured by the imaging unit 120 to an external device in accordance with, for example, an instruction given from the control unit 170.

In addition, the communication unit 160 may include an interface and a receptacle for data transport such as a universal serial bus (USB), a high definition multimedia interface (HDMI) (registered trademark), a mobile high-definition link (MHL), and the like. The communication unit 160 outputs voices collected by the sound collecting units 111 to 113 and image data captured by the imaging unit 120 to an external device using such an interface in order to reproduce, output, and store the sounds and the image data. Naturally, it is also possible to take data such as an image from an external device into the information processing device 100 using such an interface.

In addition, the communication unit 160 may be equipped with a cellular communication protocol such as an LTE-advanced (LTE-A) to have a conversation function. A user can have a conversation using the communication unit 160 when the user wears the housing 101 of the information processing device 100 on his or her own body such as the neck and is in outdoor activity.

Meanwhile, in a case where at least some of the functions of the control unit 170 to be described later are included in a smartphone carried by the user or another device such as a server on a cloud (none of which is shown), the communication unit 160 may transmit data acquired by at least one of the sound collecting units 111 to 113, the imaging unit 120, the operation unit 140, and the sensor unit 150 to another device functioning as the control unit 170 and may receive processing results for the transmitted data (for example, results of a beam forming process and a voice recognition process) from another device such as a server. In addition, the communication unit 160 may output voice data received from other devices as a voice from the voice output unit 150.

Further, in a case where at least one of the sound collecting units 111 to 113, the imaging unit 120, the operation unit 140, and the sensor unit 150 utilizes a function equipped by an external device (a smartphone carried by a user, or the like), the communication unit 160 may receive data acquired by the external device and output the received data to the control unit 170.

The control unit 170 is constituted by an integrated circuit such as a system-on-a-chip (SoC). A plurality of circuit modules for realizing functions such as a main controller, a main memory, a digital signal processing unit (video DSP) for video, a digital signal processing unit for sound, and a digital signal processing unit (audio DSP) for sound are mounted on the SoC serving as the control unit 170. In addition, the above-described functions of the communication unit 160 can also be mounted on the same SoC as the control unit 170.

The control unit 170 (specifically, a main controller mounted on the SoC) controls the overall operation in the information processing device 100 in accordance with various programs. Specifically, the control unit 170 performs a beam forming process of voice signals collected by the plurality of sound collecting units 111 to 113, a voice recognition process based on voice data subjected to the beam forming process, imaging operation control (the start and termination of imaging, a developing process, and the like) of the imaging unit 120, output of acquired data (voice data, image data, sensor data, and the like) from the communication unit 160 to the outside, control of a device operation according to an instruction input by a user through the operation unit 140, and the like.

Meanwhile, at least some of the functions of the control unit 170 may be included in a smartphone carried by a user or another device such as a server on a cloud (none of which is shown). In such a case, the control unit 170 disposed on another device communicates with the main body side of the information processing device 100 through the communication unit 160, executes various processes such as a beam forming process and a voice recognition process on the basis of data received from the main body of the information processing device 100, and transmits processing results to the communication unit 160.

The neck band type information processing device 100 is used by being worn on a user's neck in various fields, for example, the fields of life logs and athletic support. The information processing device 100 provides, for example, services for reproducing and outputting music during jogging of a user and sending an appropriate voice guidance when the user comes to a POI. In addition, as described above, the information processing device 100 is equipped with the operation unit 140 constituted by a button and a switch, a knob, a switch, a touch sensor, or the like, and basically, a user can give an instruction for starting, stopping, and temporarily stopping the execution of a service, and the like through the operation unit 140.

However, most of the housing 101 of the information processing device 100 worn on a user's neck is hidden by the face (chin) of the user, and thus it is difficult to visually check the position and operation contents of the operation unit 140. In addition, since the surface area of the housing 101 is small and the operation unit 140 is configured as a small part, it is difficult to accurately operate the operation unit in an invisible situation. Naturally, the configuration and disposition of the operation unit 140 are not standard like a QWERTY array type keyboard, and it is difficult for a user to promptly and accurately touch and operate the operation unit 140. In addition, there is a limitation on a location where parts such as a button and a switch, a knob, a switch, and a touch sensor can be disposed on the surface of the housing 101 having a small area, and thus it can also be said that it is difficult to receive all user input operations for the information processing device 100 using only the operation unit 140.

For example, when a user is wearing the neck band type information processing device 100 on his or her own neck and is acting while listening to music, when the user gets on the public transportation vehicle or an elevator, or when someone suddenly speaks to the user with a large sound volume, the user may feel embarrassed because it is not possible to accurately operate the operation unit 140. Initially, since the surface area of the housing 101 is narrow, it may be difficult in terms of design to dispose a plurality of parts (a button and a switch, a touch sensor, and the like) of the operation unit 140 on the surface of the housing 101 in a form with good operability.

Additionally, in a case where the information processing device 100 is equipped with a voice user interface (UI) function, a voice input performance may be deteriorated in an environment where a noise level is large such as outdoors, and thus there is a concern that a user may be stressed.

Consequently, in the present specification, a technique for enabling a user to perform an input operation by utilizing the shape of the housing 101 of the neck band type information processing device 100 will be proposed below. As will be described later, a user can easily or intuitively perform an input operation by causing a predetermined event with respect to the sound collecting units 111 to 113, the imaging unit 120, the sensor unit 15, the housing 101, or the like without using the operation unit 140.

As can be understood from FIG. 1 and the like, the sound collecting units 111 to 113 and the imaging unit 120 are disposed on the outer surface of the housing 101, and thus a user easily takes an action of touching the units with a hand or a finger in an invisible state and can promptly find a predetermined event. In addition, even when it is difficult to promptly found the location of the operation unit 140 on the housing 101, it is easy to touch the housing 101 itself or apply a force thereto. In addition, the user can easily and intuitively perform an input operation on the information processing device 100 by defining a response operation on the information processing device 100 side which can be easily recalled by the user (even when the user has no prior knowledge) in response to actions taken by the user with respect to the sound collecting units 111 to 113, the imaging unit 120, and the housing 101.

For example, when a user gets on the public transportation vehicle or an elevator or when someone suddenly speaks to the user, the user does not need to feel embarrassed as long as the user can stop reproducing music or temporarily reproduce music on a spot decision.

Hereinafter, operation examples of the neck band type information processing device 100 with respect to the sound collecting units 111 to 113, the imaging unit 120, and the housing 101, a method of measuring operation amounts in the operation examples, and the like will be described. Meanwhile, although illustration and description are omitted, it should be understood that the same housing operation and operation amount measurement method can be applied to other types of information processing devices 300, 400, 600, and the like.

### (1) Housing deformation operation

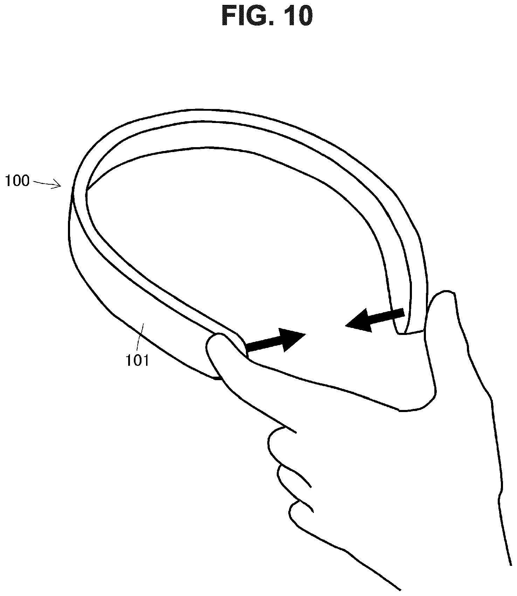

In a state where a user is wearing the information processing device 100 on his or her own neck, the opening portion of the U-shaped housing 101 faces forward (described above, see FIG. 1). Meanwhile, the user touches the outer sides of both the right and left tip portions of the U-shaped housing 101 with a thumb and an index finger of a left hand (or a right hand) to perform a fingertip operation (pinch-in) such as holding as illustrated in FIG. 10, so that a gap of the opening portion between the U-shaped tips of the housing 101 is narrowed, and thus it is possible to perform a deformation operation of closing the housing 101.

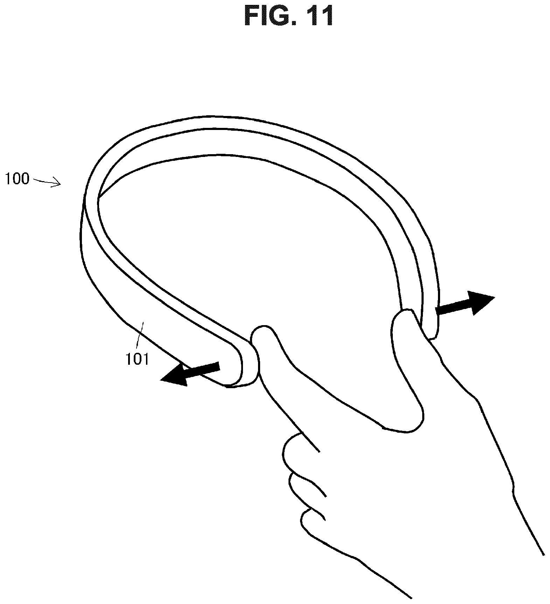

In addition, the user performs a fingertip operation (pinch-out) of opening the thumb and the index finger by inserting the thumb and the index finger of the left hand (or the right hand) into both the right and left tip portions of the U-shaped housing 101 as illustrated in FIG. 11, so that a gap of the opening portion between the U-shaped tips of the housing 101 is widened, and thus it is possible to perform a deformation operation of opening the housing 101.

At least a portion (for example, a U-shaped bottom) of the housing 101 is formed of an elastic material, so that opening and closing operations of the U-shaped housing 101 as illustrated in FIGS. 10 and 11 are facilitated. In addition, the U-shaped opening portion faces forward in a state where the user wears the housing 101 worn around the user's neck and surrounding the neck by half from both the right and left sides of the neck to the rear side (back side). Therefore, the user can perform opening and closing operations on the housing 101 as illustrated in FIGS. 10 and 11 by touching the U-shaped opening portion with either one of the right and left hands without hesitation even in an instant situation.

Examples of a method of detecting that a user has performed opening and closing operations of the U-shaped housing 101 include a method of measuring a distance of a gap of the opening portion, a method of measuring the movement of at least one of the right and left tip portions, a method of measuring a distortion amount of bendable portion of the housing 101, and the like. It is assumed that the sensor unit 150 includes a sensor that detects that opening and closing operations have been performed by any one of these methods.

As an example of the method of measuring a distance of a gap of the opening portion, a method of disposing a distance measurement sensor in the vicinity of the tip of the U-shaped housing 101 is conceivable. For example, in a case of a distance measurement sensor using infrared light, an infrared light emitting element is disposed at either one of the right and left tips of the opening portion, and an infrared light receiving element is disposed at the other tip. First, features of changes in sensor values of the distance measurement sensor which occur when a user has performed an operation of deforming the housing 101 are recorded in advance in association with identification information of the deformation operation. Further, in a case where the recorded sensor values are obtained from the output of the distance measurement sensor while the user is using the information processing device 100, it is possible to detect that the user has performed an operation of deforming the housing 101.

A distance of a gap of the opening portion is hardly changed except when the user has performed a deformation operation. Therefore, according to a method of measuring a distance of a gap of the opening portion, it is possible to stably detect that the user has performed an operation of deforming the housing 101.

However, the distance measurement sensor measuring a distance of a gap of the opening portion is hardly used for purposes other than a purpose of detecting an operation of deforming the housing 101 by a user and it is difficult to divert it to other uses. In addition, it is difficult to design the inside of the housing 101 having a narrow accommodation space because a location for installing the distance measurement sensor is limited in order to measure a distance with high accuracy to a certain extent. In addition, there is also a concern that the addition of the distance measurement sensor having no other uses may result in an increase in the burden on manufacturing costs due to an increase in the cost of parts.

In addition, as an example of the method of measuring the movement of the tip portions of the U-shaped housing 101, a method of disposing an acceleration sensor at at least one tip portion to measure the movement of the tip portion accompanying a user's opening and closing operations illustrated in FIGS. 10 and 10 is conceivable. First, features of changes in sensor values of the acceleration sensor which occur when a user has performed an operation of deforming the housing 101 are recorded in advance in association with identification information of the deformation operation. Further, in a case where the recorded sensor values are obtained from the output of the acceleration sensor while the user is using the information processing device 100, it is possible to detect that the user has performed an operation of deforming the housing 101. Meanwhile, movement of the tip portion may be measured with higher accuracy by combining a speed sensor, a gyro sensor, a vibration sensor, or the like with the acceleration sensor.

In addition to a case where the user has performed a deformation operation of opening and closing the opening portion, the acceleration of the tip portion of the housing 101 continuously fluctuates as long as the user moves. For this reason, in the method of measuring the movement of the tip portion of the U-shaped housing 101 using the acceleration sensor, an algorithm for preventing changes in acceleration, occurring except when a desired deformation operation is performed, from being erroneously detected is required. For example, erroneous detection may be prevented by discriminating between changes in acceleration when the user has performed an operation of deforming the housing 101 and changes in acceleration which have occurred in other cases by machine learning. For example, the accuracy of detection may be improved by adopting deep learning.

Meanwhile, the information processing device 100 is equipped with an acceleration sensor as a portion of the sensor unit 150 for the purpose of detecting the state of a user wearing the housing 101 on his/her neck and the surrounding state of the user (described above). Therefore, since the acceleration sensor can be used in combination with other uses, an increase in costs is reduced and the number of parts is not increased according to a method of measuring the movement of the tip portion of the U-shaped housing 101, thereby reducing the burden on design.

In addition, as an example of the method of measuring a distortion amount of a bendable portion of the housing 101, a method of disposing a dynamic sensor such as a distortion gauge at the bendable portion is conceivable. For example, the distortion gauge, which is a device that measures changes in electric resistance due to the deformation of a resistor of a metal by a bridge circuit, can convert the measured changes in electric resistance into a distortion amount. First, features of changes in electric resistance of the distortion gauge which occur when a user has performed an operation of deforming the housing 101 are recorded in advance in association with identification information of the deformation operation. Further, in a case where the recorded changes in electric resistance are obtained from the distortion gauge while the user is using the information processing device 100, it is possible to detect that the user has performed an operation of deforming the housing 101.

When it can be assumed that the housing 101 is not bent (or bending does not occur at a location where the distortion gauge is disposed) except when the user has performed a deformation operation, it is possible to stably detect that the user has performed an operation of deforming the housing 101 by a method of measuring a distortion amount of the bendable portion of the housing 101.

However, the distortion gauge measuring a distortion amount of the bendable portion of the housing 101 is hardly used for purposes other than a purpose of detecting an operation of deforming the housing 101 by a user and is hardly diverted to other uses, and thus there is a concern that an increase in the cost of parts may result in an increase of the burden on manufacturing costs. In addition, although the distortion gauge is used, for example, by being attached to the surface of the bendable portion of the housing 101, there is also a concern that the wiring design for pulling a signal line from the distortion gauge into the housing 101 may become complicated.

Meanwhile, the method of measuring a distance of a gap of the opening portion of the housing is based on the assumption that the housing is a structure having an opening portion such as a U-shaped portion. Therefore, the method is an operation method which cannot be applied to the information processing devices 700 and 800 constituted by a housing, not having an opening portion, which has a closed shape, such as an O-shape as illustrated in FIGS. 7 and 8. On the other hand, the method of measuring the movement of the tip portion and the method of measuring a distortion amount of the bendable portion of the housing can be applied to a housing structure as long as the housing structure is configured such that at least a portion is bendable and a deformation operation can be performed thereon, regardless of the shape of the housing such as a U-shape or an O-shape.

### (2) Operation of touching tip portion of housing

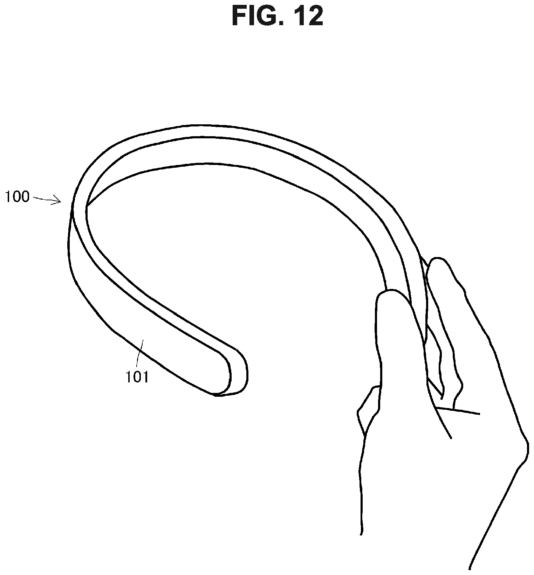

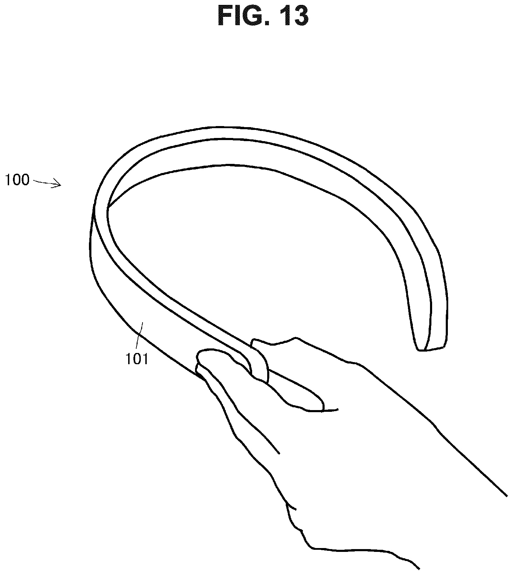

In a state where a user is wearing the information processing device 100 on his or her own neck, the opening portion of the U-shaped housing 101 faces forward (described above, see FIG. 1). Meanwhile, the user can perform an operation of touching the left tip portion of the U-shaped housing 101 with a right hand or holding or covering the left tip portion with a fingertip, as illustrated in FIG. 12. Similarly, the user can perform an operation of touching the right tip portion of the housing 101 with a left hand or holding or covering the right tip portion with a fingertip, as illustrated in FIG. 13. Further, the user can perform an operation of simultaneously touching both the right and left tip portions of the housing 101 with both hands or holding or covering both the right and left tip portions (not shown).

The U-shaped opening portion faces forward in a state where the user wears the housing 101 worn around the user's neck and surrounding the neck by half from both the right and left sides of the neck to the rear side (back side). Therefore, the user can perform an operation of touching, holding, and covering either or both of the right and left tip portions of the U-shaped opening portion as illustrated in FIGS. 12 and 13 with the right and left hands without hesitation even in an instant situation. Naturally, the user can touch and cover not only the tip portion of the housing 101 but also any location on the outer circumference.

There are various methods of detecting that a user has touched the surface of the housing 101. An example of one of the methods is a method of disposing a proximity sensor or a touch sensor at a location where a user's touch operation is scheduled to be performed, such as the tip portion of the housing 101. In this case, first, features of changes in sensor values of the proximity sensor or the touch sensor which occur when a user has performed an operation of touching the location of the housing 101 are recorded in advance in association with identification information of the touch operation. Further, in a case where the recorded sensor values are obtained from the output of the proximity sensor or the touch sensor while the user is using the information processing device 100, it is possible to detect that the user has performed an operation of touching the location of the housing 101.

However, in a case where the proximity sensor or the touch sensor is hardly used for purposes other than a purpose of detecting an operation of a user touching the housing 101 and is hardly diverted to other uses, there is a concern that the cost of parts may increase and the design of wiring may become complicated.

Consequently, as another method of detecting that a user has touched the surface of the housing 101, a method of detecting an operation of the user touching the housing 101 by utilizing the plurality of sound collecting units 111 to 113 constituted by a microphone or the like and the imaging unit 120 will also be proposed.

First, a method of detecting that a user has touched the surface of the housing 101 by utilizing the sound collecting units 111 to 113 will be described.

The sound collecting units 111 to 113 are disposed at a plurality of locations in addition to the tip portion of the U-shaped housing 101. In addition, when a hole for the microphone of any one of the sound collecting units 111 to 113 is blocked due to a user's operation of touching the surface of the housing 101 with a fingertip as illustrated in FIGS. 12 and 13, the blocking of the microphone can be detected as a sound pressure change. In addition, the user can also simultaneously cause sound pressure changes at two or more locations by touching the locations of two or more of the sound collecting units 111 to 113 at the same time.

Therefore, first, features of sound pressure changes, occurring in the sound collecting units 111 to 113 due to the blocking of the holes for the microphones when the user has performed an operation of touching a specific location of the housing 101, are recorded in advance in association with identification information of an operation performed on, such as a touched location. Further, in a case where the recorded sound pressure changes are obtained from any one of the sound collecting units 111 to 113 while the user is using the information processing device 100, it is possible to detect that the user has performed a touch operation at a corresponding location of the housing 101. Further, as in the present embodiment, in a configuration in which the sound collecting units 111 to 113 are disposed at a plurality of locations on the housing 101, it is possible not only to define a response operation on the information processing device 100 side for each location where a sound pressure change (that is, a touch) has been detected but also to define a response operation for each combination of two or more locations where a sound pressure change has occurred.

There is a possibility that sound pressure changes of the sound collecting units 111 to 113 may also occur due to an event other than the blocking of the holes for the microphones of the sound collecting units 111 to 113 by a user's hand. For this reason, in the method of detecting that a user has touched the surface of the housing 101 using the sound collecting units 111 to 113, an algorithm for preventing a sound pressure change, occurring except when a user's touch operation is performed, from being erroneously detected is required. For example, erroneous detection may be prevented by discriminating between sound pressure changes of the sound collecting units 111 to 113 occurring when the user has performed an operation of touching the housing 101 and sound pressure changes of the sound collecting units 111 to 113 occurring in other cases by machine learning. For example, the accuracy of detection may be improved by adopting deep learning.

Consequently, the method of detecting that a user has touched the surface of the housing 101 by utilizing the imaging unit 120 will be described.

The imaging unit 120 is disposed at the tip portion of the U-shaped housing 101 in order to easily image a subject on the front side. Naturally, another imaging unit may be installed at a location other than the tip portion. When the front side of the imaging unit 120 (an optical axis direction of a lens) of the imaging unit 120 is blocked due to a user's operation of touching the surface of the housing 101 with a fingertip as illustrated in FIGS. 12 and 13, the blocking of the front side can be detected as a luminance change. Further, in a case where a plurality of imaging units are prepared, a user can also simultaneously cause luminance changes at two or more locations by touching the locations of two or more imaging units at the same time.

Therefore, first, features of luminance changes, occurring in the imaging unit 120 when the user has performed an operation of touching the imaging unit 120 at the tip portion of the housing 101, are recorded in advance in association with identification information of an operation performed on, such as a touched location. Further, in a case where the recorded luminance changes are obtained from the imaging unit 120 while the user is using the information processing device 100, it is possible to detect that the user has performed a touch operation at a corresponding location of the housing 101. Further, in a configuration in which an imaging unit is disposed at a plurality of locations on the housing 101, it is possible not only to define a response operation on the information processing device 100 side for each location where a luminance change (that is, a touch) has been detected but also to define a response operation for each combination of two or more locations where a luminance change has occurred. Additionally, it is also possible to define a response operation on the information processing device 100 side with respect to combinations of a location where a luminance change has been detected by the imaging unit 120 and locations where sound pressure changes have been detected by the sound collecting units 111 to 113.

There is a possibility that a luminance change of the imaging unit 120 may also occur due to an event other than the touch of the imaging unit 120 by a user's hand. For this reason, in the method of detecting that a user has touched the surface of the housing 101 using the imaging unit 120, an algorithm for preventing a luminance change, occurring except when a user's touch operation is performed, from being erroneously detected is required. For example, erroneous detection may be prevented by discriminating between luminance changes of the imaging unit 120 occurring when the user has performed an operation of touching the housing 101 and luminance changes of the imaging unit 120 occurring in other cases by machine learning. For example, the accuracy of detection may be improved by adopting deep learning.

As described above with reference to FIG. 9, the plurality of sound collecting units 111 to 113 and the imaging unit 120 are components which are normally included in the neck band type information processing device 100. The sound collecting units 111 to 113 have the original uses of acquiring voice data such as voices uttered by a user or surrounding voices for a beam forming process. In addition, the imaging unit 120 has the original use of imaging a speaking partner of a user and the surrounding scenery. That is, according to a method of detecting an operation of touching the housing 101 by a user by utilizing the sound collecting units 111 to 113 and the imaging unit 120 which have their original uses, an increase in costs is reduced and the number of parts is not increased, thereby reducing the burden on design.

### (3) Operation of grasping tip portion of housing

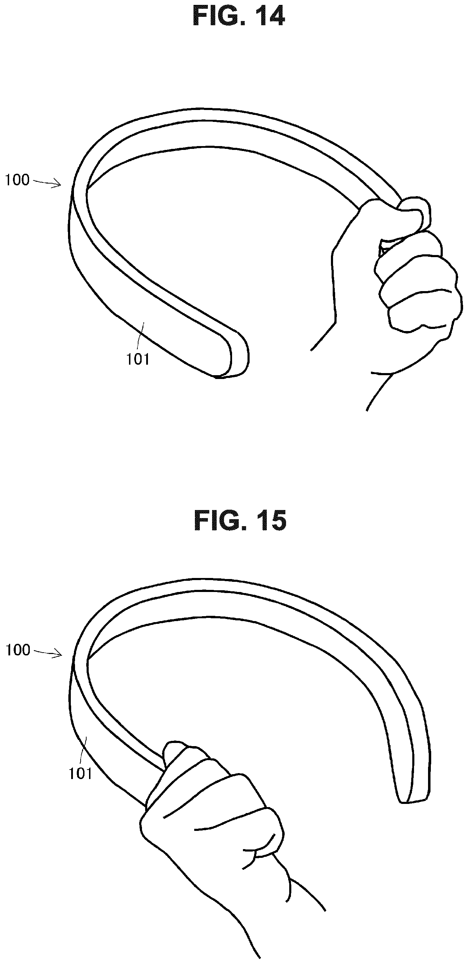

In a state where a user wears the information processing device 100 on his or her own neck, the opening portion of the U-shaped housing 101 faces forward (described above, see FIG. 1). Meanwhile, the user can perform an operation of grasping the left tip portion of the U-shaped housing 101 with a left hand as illustrated in FIG. 14. Similarly, the user can perform an operation of grasping the right tip portion of the U-shaped housing 101 with a right hand as illustrated in FIG. 15. Further, the user can perform an operation of simultaneously holding both the right and left tip portions of the housing 101 with both hands (not shown).

The U-shaped opening portion faces forward in a state where the user wears the housing 101 worn around the user's neck and surrounding the neck by half from both the right and left sides of the neck to the rear side (back side). Therefore, the user can perform an operation of grasping either or both of the right and left tip portions of the U-shaped opening portion as illustrated in FIGS. 14 and 15 with the right and left hands without hesitation even in an instant situation. In addition, it is possible to define a response operation on the information processing device 100 side with respect to each of an operation of grasping only the left tip portion of the housing 101, an operation of grasping only the right tip portion, and an operation of simultaneously grasping the right and left tip portions.

There are various methods of detecting that a user has grasped the tip portion of the U-shaped housing 101. For example, it is possible to detect that the left tip portion has been grasped on the basis of a sound pressure change of the sound collecting unit 111 disposed at the left tip portion of the housing 101. In addition, it is possible to detect that the right tip portion has been grasped on the basis of a luminance change of the imaging unit 120 disposed at the right tip portion of the housing. An algorithm such as machine learning may be introduced in order to prevent a sound pressure change and a luminance change from being erroneously detected (described above).

In the method of detecting a sound pressure change of the sound collecting unit 111 and a luminance change of the imaging unit 120, there is a problem that it is not possible to discriminate whether a tip portion has been touched or grasped. Consequently, the grasping of the tip portion may be detected on the basis of changes in pressure by disposing pressure-sensitive sensors at the right and left tip portions of the housing 101. In this case, first, features of changes in sensor values of the pressure-sensitive sensors which occur when a user has performed an operation of grasping the right and left tip portions of the housing 101 are recorded in advance. Further, in a case where the recorded sensor values are obtained from the output of the pressure-sensitive sensors while the user is using the information processing device 100, it is possible to detect that the user has performed an operation of grasping the tip portions of the housing 101. Naturally, it may be detected that the user has grasped the tip portions by combining the sensor values of the pressure-sensitive sensors and detection results of a sound pressure change of the sound collecting unit 111 and a luminance change of the imaging unit 120 with each other.

### (4) Operation of tracing surface of housing

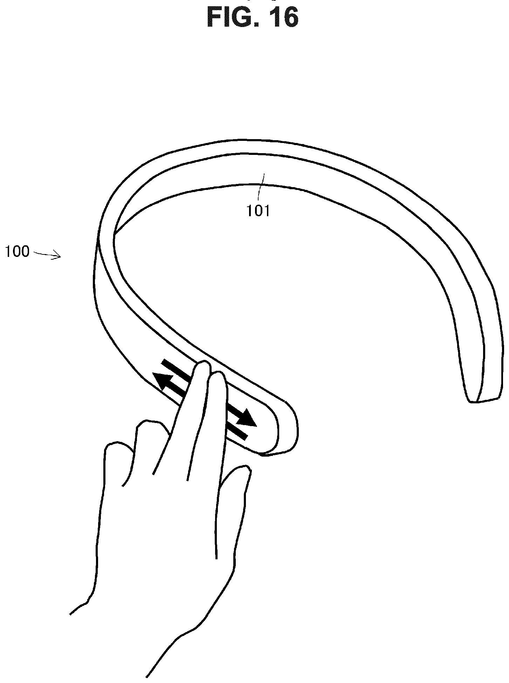

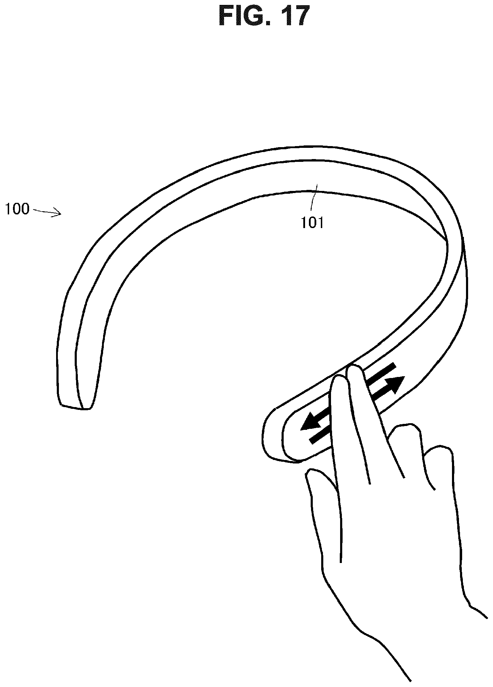

In a state where a user wears the information processing device 100 on his or her own neck, the opening portion of the U-shaped housing 101 faces forward (described above, see FIG. 1). Meanwhile, the user can perform an operation of tracing the right side surface of the housing 101 with a fingertip as illustrated in FIG. 16. Similarly, the user can perform an operation of tracing the left side surface of the housing 101 with a fingertip as illustrated in FIG. 17.

Meanwhile, as illustrated in FIG. 4, when using the structure of the housing 401 of which the width increases as it approaching the front side in the vicinity of the opening, that is, at the right and left tip portions, the area of the side surface on which the user performs the tracing operation is widened, and thus operability is improved.

The U-shaped opening portion faces forward in a state where the user wears the housing 101 worn around the user's neck and surrounding the neck by half from both the right and left sides of the neck to the rear side (back side). Therefore, the user can perform a tracing operation on either or both of the right and left side surfaces of the housing 101 as illustrated in FIGS. 16 and 17 with the right and left fingertips without hesitation even in an instant situation.

Here, there are two operations of tracing the right and left side surfaces of the housing 101, respectively, frontwards and backwards. Therefore, a user can performs the following eight input operations by combining operations to be performed on the right and left side surfaces of the housing 101 with each other. In addition, it is possible to define a response operation on the information processing device 400 side with respect to each of the operations.

- Only an operation of tracing the right side surface of the housing 101 frontwards is performed.
- Only an operation of tracing the right side surface of the housing 101 backwards is performed.
- Only an operation of tracing the left side surface of the housing 101 frontwards is performed.
- Only an operation of tracing the left side surface of the housing 101 backwards is performed.
- Operations of tracing both the right and left side surfaces of the housing 101 frontwards are performed simultaneously.
- Operations of tracing both the right and left side surfaces of the housing 101 backwards are performed simultaneously.
- An operation of tracing the right side surface of the housing 101 frontwards and an operation of tracing the left side surface backwards are performed simultaneously.
- An operation of tracing the right side surface of the housing 101 backwards and an operation of tracing the left side surface frontwards are performed simultaneously.

There are various methods of detecting that a user has traced the side surface of the housing 101. For example, it is possible to detect a contact position and movement of a fingertip by disposing capacitance type touch sensors on the right and left side surfaces of the housing 101. In this case, first, features of changes in sensor values of the touch sensors which occur when a user has performed an operation of tracing the right and left side surfaces of the housing 101 are recorded in advance in association with an operation surface and an operation direction. Further, in a case where the recorded sensor values are obtained from the output of the touch sensors while the user is using the information processing device 100, it is possible to detect that the user has performed an operation of tracing either the right or left side surface of the housing 101.

Meanwhile, in addition to a case where the user traces the side face of the housing 101, the touch sensor reacts by the user touching the side face of the housing 101 with a fingertip or a portion of the body of the user other than the fingertip. For this reason, an algorithm for preventing the output of the touch sensor, other than a user's tracing operation with a fingertip, from being erroneously detected is required. For example, erroneous detection may be prevented by performing machine learning of the output of the touch sensor when the user has performed an operation of tracing the side surface of the housing 101. For example, the accuracy of detection may be improved by adopting deep learning.

### (5) Operation of shifting wearing position of housing

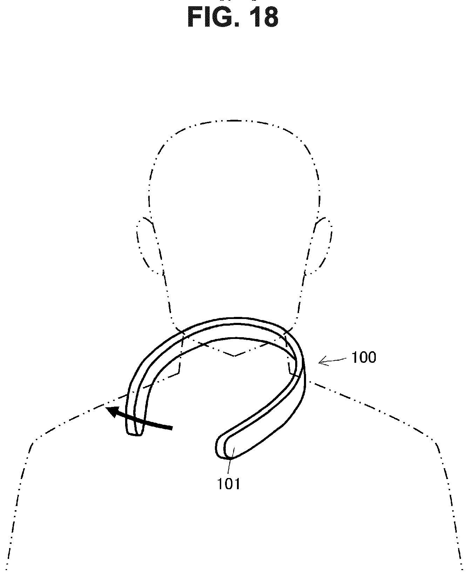

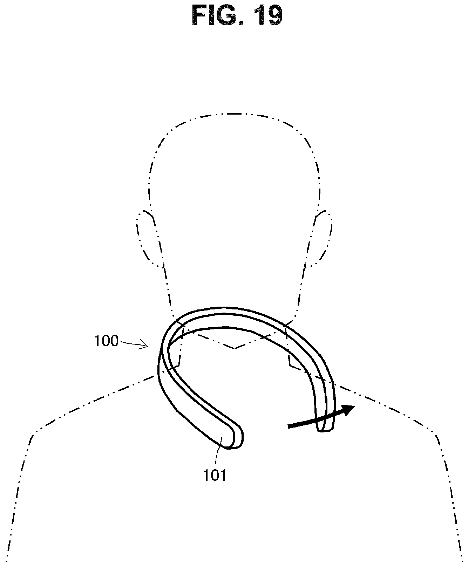

In a state where a user wears the information processing device 100 normally (or usually) on his or her own neck, the opening portion of the U-shaped housing 101 faces in the front direction of the user. Meanwhile, the user can rotate the housing 101 around his or her own neck to shift the opening to face rightward from the front side as illustrated in FIG. 18, or conversely, to shift the opening to face leftward from the front side as illustrated in FIG. 19.

The U-shaped opening portion faces forward in a state where the user wears the housing 101 worn around the user's neck and surrounding the neck by half from both the right and left sides of the neck to the rear side (back side). Therefore, the user can perform an operation of rotating the housing 101 around his or her own neck to shift a wearing position so that the opening faces either rightward or leftward from the front side as illustrated in FIGS. 18 and 19 without hesitation even in an instant situation.

There are various methods of detecting that a user has shifted a wearing position of the housing 101 and detecting a shifting direction. For example, a method of measuring an acceleration generated when a user shifts a wearing position of the housing 101 by using an acceleration sensor included in the information processing device 100 as the sensor unit 150 is conceivable. First, features of changes in sensor values of the acceleration sensor which occur when a user has performed an operation of shifting a wearing position of the housing 101 worn around his or her own neck are recorded in advance in association with identification information of the operations of shifting the wearing position to the right and left. Further, in a case where the recorded sensor values are obtained from the output of the acceleration sensor while the user is using the information processing device 100, it is possible to detect that the user has performed an operation of shifting a wearing position of the housing 101 either rightward or leftward. Meanwhile, the movement of the tip portion may be measured with higher accuracy by combining a speed sensor, a gyro sensor, a vibration sensor, or the like with the acceleration sensor.

In addition to a case where the user has performed an operation of shifting a wearing position of the housing 101, the acceleration of the tip portion of the housing 101 continuously fluctuates as long as the user moves. For this reason, in the method of measuring an operation of shifting a wearing position of the housing 101 by the acceleration sensor, an algorithm for preventing changes in acceleration, occurring except when an operation of shifting a wearing position has been performed, from being erroneously detected is required. For example, erroneous detection may be prevented by discriminating between changes in acceleration when the user has performed an operation of shifting a wearing position of the housing 101 and changes in acceleration which have occurred in other cases by machine learning. For example, the accuracy of detection may be improved by adopting deep learning.

Meanwhile, the information processing device 100 is equipped with an acceleration sensor as a portion of the sensor unit 150 for the purpose of detecting the state of a user wearing the housing 101 on his/her neck and the surrounding state of the user (described above). Therefore, since the acceleration sensor can be used in combination with other uses, an increase in costs is reduced and the number of parts is not increased according to a method of measuring the movement of the tip portion of the U-shaped housing 101, thereby reducing the burden on design.

### (6) Operation on operator

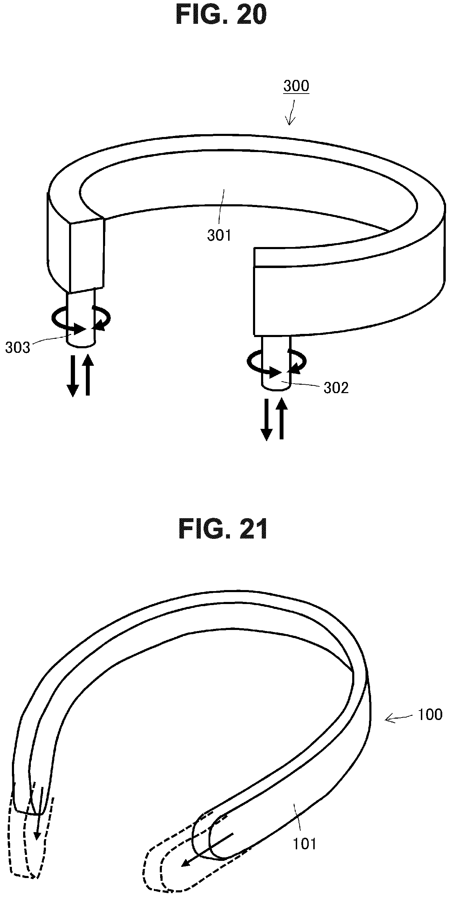

FIG. 3 illustrates the information processing device 300 including the protrusion portions 302 and 303, playing a role of adjusting the inclination of the housing 301 in a wearing state, under the right and left tip portions of the U-shaped housing 301. At least one of the protrusion portions 302 and 303 is configured as an operator such as a dial capable of being rotated or a button capable of being pressed, and thus a user can perform an operation on the operator (see FIG. 20).

Here, the user can perform the following eleven input operations by combining rotation operations and pressing operations with respect to the left and right protrusion portions 302 and 303 with each other. In addition, it is possible to define a response operation on the information processing device 300 side with respect to each of the operations.

- Only the protrusion portion 302 is rotated counterclockwise.
- Only the protrusion portion 302 is rotated clockwise.
- Only the protrusion portion 303 is rotated counterclockwise.
- Only the protrusion portion 303 is rotated clockwise.
- The protrusion portion 302 and the protrusion portion 303 are simultaneously rotated counterclockwise.
- The protrusion portion 302 and the protrusion portion 303 are simultaneously rotated clockwise.
- The protrusion portion 302 is rotated counterclockwise and the protrusion portion 303 is rotated clockwise.
- The protrusion portion 302 is rotated clockwise and the protrusion portion 303 is rotated counterclockwise.
- Only the protrusion portion 302 is pressed.
- Only the protrusion portion 303 is pressed.
- The protrusion portion 302 and the protrusion portion 303 are simultaneously pressed.

### (7) Extension and contraction operations of housing with respect to tip portion

As illustrated in FIG. 21, at least one of the right and left tip portions of the U-shaped housing 101 is configured to be extensible and contractible, so that a user can perform the following three operations. In addition, it is possible to define a response operation on the information processing device 100 side with respect to the operations.

- Only the left tip portion is extended.
- Only the right tip portion is extended.
- Both the right and left tip portions are extended simultaneously.

For example, the tip portions of the housing 101 are formed of an extensible material, so that extension and contraction operations as illustrated in FIG. 21 can be performed. Alternatively, mechanical slide mechanisms are incorporated into the tip portions, so that extension and contraction operations as illustrated in FIG. 21 can also be performed.

The U-shaped opening portion faces forward in a state where the user wears the housing 101 worn around the user's neck and surrounding the neck by half from both the right and left sides of the neck to the rear side (back side). Therefore, the user can perform an operation of extending and contracting either or both of the right and left tip portions as illustrated in FIG. 21 without hesitation even in an instant situation.

Examples of the input operations (1) to (7) capable of being mainly performed on the housing 101 of the information processing device 100 by a user have been described so far. It should be understood that the information processing device 100 is capable of not only performing any one of the input operations (1) to (7) but also using any two or more of the input operations (1) to (7) in combination.

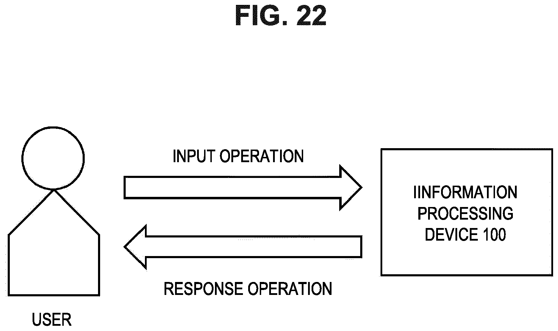

When the above-described input operations are performed by a user, the information processing device 100 returns a response operation to the user (see FIG. 22). Hereinafter, an example of a response operation on the information processing device 100 side which can be defined with respect to the input operations (1) to (7) will be described.

### (11) Response operation with respect to operation of deforming housing

When a user has performed the operations of deforming the housing as illustrated in FIGS. 10 and 11 a predetermined number of times, the information processing device 100 cancels a locked state or a sleep state of the system as a response operation. Alternatively, the information processing device 100 may conversely transition to a locked state or a sleep state as a response operation with respect to a deformation operation. The predetermined number of times mentioned here may be one time or a plurality of times. However, the predetermined number of times may be set to a plurality of times in order to prevent an erroneous operation due to an event other than an operation performed on the housing 101 by a user.

As another example of a response operation, an index of a list in an application being currently executed by the information processing device 100 may be changed by the number of deformation operations. For example, the information processing device 100 performs fast-forwarding or rewinding by the number of pieces of music equivalent to the number of deformation operations during music reproduction. Alternatively, a reproduction position of a content is jumped forward or backward by the number of chapters equivalent to the number of deformation operations.

A deformation operation of closing the opening of the housing 101 as illustrated in FIG. 10 and a deformation operation of opening the opening of the housing 101 as illustrated in FIG. 11 are easily understood by a user as paired operations. Consequently, the following response operations of the information processing device 100 which are paired may be allocated to each of the deformation operation of closing the housing 101 and the deformation operation of opening the housing 101.

- Music reproduction is started by a closing deformation operation, and music reproduction is stopped by an opening deformation operation.
- A piece of music is fast-forwarded by a closing deformation operation, and a piece of music is rewound by an opening deformation operation.
- A sound volume is increased by a closing deformation operation, and a sound volume is lowered by an opening deformation operation.

### (12) Response operation with respect to operation of touching tip portion of housing

When a user continuously touches either one of the right and left tip portions of the opening of the housing 101 as illustrated in FIGS. 12 and 13 for only a fixed period of time, the information processing device 100 causes the system to transition to a sleep state or a shutdown state as a response operation. Alternatively, the information processing device 100 may conversely cancel a sleep state or may restart up the system as a response operation with respect to an operation of touching the tip portion of the housing 101.

An operation of touching the left tip portion of the opening of the housing 101 as illustrated in FIG. 12 and an operation of touching the right tip portion of the opening of the housing 101 as illustrated in FIG. 13 are easily understood by a user as paired operations. Consequently, the following paired response operations of the information processing device 100 may be allocated to each of an operation of touching the left tip portion of the opening of the housing 101 and an operation of touching the right tip portion of the housing 101.

- Music reproduction is started by an operation of touching the left tip portion, and music reproduction is stopped by an operation of touching the right tip portion.
- A piece of music is fast-forwarded by an operation of touching the left tip portion, and a piece of music is rewound by an operation of touching the right tip portion.
- A sound volume is increased by an operation of touching the left tip portion, and a sound volume is lowered by an operation of touching the right tip portion.

In a configuration example in which the imaging unit 120 is disposed at the right tip portion of the opening of the housing 101, an imaging operation of the imaging unit 120 may be started as a response operation of the information processing device 100 when an operation of touching only the left tip portion of the opening of the housing 101 for a fixed period of time (the right tip portion is left released) is detected. When an operation of touching the right tip portion of the opening of the housing 101 has been performed during an imaging operation of the imaging unit 120 or when a reduction in luminance due to the blocking of a field of view of the imaging unit 120 by a user's hand or other foreign substances, or the like is detected, the imaging operation of the imaging unit 120 may be stopped or temporarily stopped as a response operation of the information processing device 100.

### (13) Response operation with respect to operation of grasping tip portion of housing

When a user performs an operation of grasping either one of the right and left tip portions of the opening of the housing 101 as illustrated in FIGS. 14 and 15, the information processing device 100 cancels a locked state or a sleep state of the system as a response operation. Alternatively, the information processing device 100 may conversely cause the system to transition to a locked state or a sleep state as a response operation with respect to an operation of grasping the tip portion of the housing 101 only for a fixed period of time.

It is easy to promptly perform an operation of a user grasping the tip portion of the housing 101. Consequently, an urgent processing command for an application being currently executed may be allocated as a response operation of the information processing device 100 with respect to an operation of grasping the tip portion of the housing 101 by a user.

For example, when a user promptly grasps the tip portion of the opening at a timing the user does not desire to reproduce music during music reproduction using the information processing device 100, the music reproduction is stopped, temporarily stopped, or muted as a response operation. Therefore, when a user gets into the public transportation vehicle or an elevator, the user does not have to feel embarrassed in a case where reproduced sounds resound. In addition, even when someone suddenly speaks to the user, the user can respond to a conversation without being disturbed by the reproduced sounds.

Although an operation of grasping either one of the right and left tip portions of the opening of the housing 101 by a user is promptly performed, it is not easy to promptly perform an operation of simultaneously grasping both the right and left tip portions. Consequently, when a user performs an operation of simultaneously grasping both the right and left tip portions of the opening of the housing 101, an emergency operation such as the transition of the system to a sleep state or a shutdown state may be allocated as a response operation of the information processing device 100.

### (14) Response operation with respect to operation of tracing side surface of housing

When a user performs an operation of tracing either one of the right and left side surfaces of the housing 101 as illustrated in FIGS. 16 and 17, the information processing device 100 may change an index of a list in an application being currently executed as a response operation. As a response operation, the information processing device 100 as illustrated below may allocate processing related to adjustment of a reproduction sound volume, selection of music, or the like during music reproduction.

- A reproduction sound volume is increased in response to the execution of an operation of tracing only the left side surface of the housing 101 frontwards or backwards.
- A reproduction sound volume is reduced in response to the execution of an operation of tracing only the right side surface of the housing 101 frontwards or backwards.
- Rewinding to the prior music is performed in response to the simultaneous execution of an operation of tracing the left side surface of housing 101 frontwards and an operation of tracing the right side surface of housing 101 backwards.
- Fast-forwarding to the next music is performed in response to the simultaneous execution of an operation of tracing the left side surface of housing 101 backwards and an operation of tracing the right side surface of housing 101 frontwards.
- The system is made to transition to a sleep state or a shutdown state in response to the execution of an operation of simultaneously tracing both the right and left side surfaces of the housing 101 frontwards.
- The system is made to transition to a sleep state or a shutdown state in response to the execution of an operation of simultaneously tracing both the right and left side surfaces of the housing 101 backwards.

An operation of tracing the side surface of the housing 101 can be easily detected only by respectively disposing, for example, capacitance type touch sensors on the right and left side surfaces of the housing 101 and can be utilized as an input method of a user. In addition, a user can perform an input operation only by performing a simply operation of "tracing" the side surface and can perform eight input operations by combining the right and left side surfaces of the housing 101 and tracing directions with each other. Therefore, it is also possible to set a rule preferred by a user and execute personal authentication, credit settlement, and the like by the operation thereof. Meanwhile, as illustrated in FIG. 4, when the structure of the housing 401 having a width becoming larger toward the front side is used in the vicinity of the opening, that is, at the right and left tip portions, the area of the side surface on which the user performs the tracing operation is widened, and thus operability is improved.

### (15) Response operation with respect to operation of shifting wearing position of housing

It is easy to promptly perform an operation of shifting a wearing position of the housing 101 to the right or left by a user as illustrated in FIGS. 18 and 19. Consequently, an urgent processing command for an application being currently executed may be allocated as a response operation of the information processing device 100 with respect to an operation of shifting a wearing position of the housing 101 to at least one of the right and the left by a user.

For example, when a user promptly shifts a wearing position of the housing 101 to the right or left at a timing at which the user does not desire to reproduce music during music reproduction using the information processing device 100, the music reproduction is stopped, temporarily stopped, or muted as a response operation. Therefore, when a user gets into the public transportation vehicle or an elevator, the user does not have to feel embarrassed in a case where reproduced sounds resound. In addition, even when someone suddenly speaks to the user, the user can respond to a conversation without being disturbed by the reproduced sounds.

In addition, when a user promptly shifts a wearing position of the housing 101 to the right or left during conversation using the information processing device 100, a response process such as the termination of conversation or the setting of a holding state may be executed.

### (16) Response operation with respect to operation for operator

As illustrated in FIG. 20, a user can perform a rotation operation and a pressing operation on the protrusion portions 302 and 303 disposed under the right and left tip portions of the housing 301 of the information processing device 300. The information processing device 300 may execute gain adjustment of a speaker as a response operation with respect to a rotation operation of either the protrusion portion 302 or 303 and may execute gain adjustment of a microphone as a response operation with respect to the other rotation operation. Alternatively, the information processing device 300 may fast-forward or rewind music in accordance with a rotation direction and may perform fast-forwarding or rewinding by the number of pieces of music based on the amount of rotation, as a response operation with respect to a rotation operation of either the protrusion portion 302 or 303 during music reproduction.

### (17) Response operation with respect to extension and contraction operations of tip portion of housing

As illustrated in FIG. 21, in a case where the right and left tip portions of the housing 101 of the information processing device 100 can be extended and contracted, a user can also efficiently collect voices uttered by the user himself or herself under an environment with a high noise level such as outdoors by extending the tip on which the sound collecting unit is disposed and bringing the extended tip close to the mouth of the user himself or herself. Consequently, the information processing device 100 may start a conversation function or may cancel a holding state of conversation as a response operation with respect to an operation of extending the left tip portion at which the sound collecting unit 111 is disposed.

As described so far, according to the technology disclosed in the present specification, a user can perform various input operations by utilizing the shape of the housing 101 of the neck band type information processing device 100. As a result, the user can select the most comfortable UI according to a situation.

### Industrial Applicability

The technology disclosed in the present specification has been described in detail above with reference to the specific embodiment. However, it will be obvious to those skilled in the art that modification and replacement of the embodiment can be made without departing from the scope of the technology disclosed in the present specification.

In the present specification, description has been given focusing on an embodiment in which the technology disclosed in the present specification is applied to a neck band type wearable device, but the scope of the technology disclosed in the present specification is not limited thereto. The technology disclosed in the present specification can be similarly applied to various forms of wearable devices other than a neck band. In addition, the technology disclosed in the present specification can also be applied to various types of information processing devices other than a wearable device, including tablet terminals and notebook computers.

In addition, the information processing device to which the technology disclosed in the present specification is applied is used by being worn around a user's neck, for example, as a neck band type wearable device. Naturally, the information processing device can be used by being worn on any area in the user's body other than the neck, or can also be used by being disposed on, for example, a desk without being worn on the body of the user.

In addition, the information processing device to which the technology disclosed in the present specification is applied can be used in various fields such as the fields of life logs and athletic support, for example, as a neck band type wearable device. The information processing device can provide various services, such as music reproduction during jogging of a user wearing the information processing device, capturing of a moving image or a still image, and sending of an appropriate voice guidance, to a user.

In short, the technology disclosed in the present specification has been described in an illustrative form, and the description of the present specification should not be interpreted in a limited manner. The claims should be taken into account to judge the gist of the technology disclosed in the present specification.

Additionally, the present technology may also be configured as below.
(1) An information processing device including:
   a housing which is worn by a user;
   a detection unit which detects an operation performed on the housing; and
   a control unit which controls a response operation with respect to a result of the detection.
(2) The information processing device according to (1),
   in which the detection unit detects a deformation operation of the housing.
(3) The information processing device according to any of (1) or (2),
   in which the housing has a U-shape, and
   the detection unit detects at least one of a closing operation and an opening operation of a U-shaped opening of the housing.
(4) The information processing device according to (3),
   in which the detection unit detects an operation performed on the housing using at least one of measurement of a distance of a gap of the U-shaped opening of the housing, measurement of movement of at least one tip portion of the opening, and measurement of distortion of the housing.
(5) The information processing device according to any of (1) to (4),
   in which the detection unit detects an operation of touching the housing.
(6) The information processing device according to (5),
   in which the housing has a U-shape, and
   the detection unit detects an operation of touching at least one of right and left sides of the U-shaped opening of the housing.
(7) The information processing device according to any of (5) or (6),
   in which the detection unit detects an operation of touching the housing on the basis of a detection result of a proximity sensor or a touch sensor.
(8) The information processing device according to any of (5) or (6), further including:
   at least one of a sound collecting unit and an imaging unit,
   in which the detection unit detects an operation of touching a location where the sound collecting unit is disposed in response to a change in sound pressure in the sound collecting unit or detects an operation of touching a location where the imaging unit is disposed in response to a change in luminance in the imaging unit.
(9) The information processing device according to any of (1) to (8),
   in which the housing has a U-shape, and
   the detection unit detects an operation of grasping at least one of the right and left tip portions of the U-shaped opening of the housing.
(10) The information processing device according to (9), further including:
   at least one of a sound collecting unit and an imaging unit,
   in which the detection unit detects an operation of grasping a location where the sound collecting unit is disposed in response to a change in sound pressure in the sound collecting unit or detects an operation of grasping a location where the imaging unit is disposed in response to a change in luminance in the imaging unit.
(11) The information processing device according to (9),
   in which the detection unit detects an operation of touching the housing on the basis of a detection result of a pressure-sensitive sensor.
(12) The information processing device according to any of (1) to (11),
   in which the detection unit detects an operation of tracing a surface of the housing.
(13) The information processing device according to (12),
   in which the housing has a U-shape, and
   the detection unit detects which one of right and left surfaces of the U-shaped opening of the housing has been traced and detects a tracing direction.
(14) The information processing device according to any of (12) or (13),
   in which the detection unit detects an operation of tracing the surface of the housing on the basis of a detection result of a touch sensor.
(14) The information processing device according to any of (1) to (14),
   in which the detection unit detects an operation of shifting a wearing position of the housing.
(16) The information processing device according to (15),
   in which the detection unit detects an operation of shifting the wearing position of the housing and a shifting direction on the basis of a detection result of an acceleration sensor.
(17) The information processing device according to any of (1) to (16),
   in which the housing has a U-shape,
   the information processing device further comprises operators capable of performing at least one of a rotation operation and a pressing operation on right and left tip portions of the U-shaped opening of the housing, and
   the detection unit detects a rotation operation or a pressing operation of the right and left operators.
(18) The information processing device according to any of (1) to (17),
   in which the housing has a U-shape, and
   the detection unit detects extension and contraction operations of right and left tip portions of the U-shaped opening of the housing.
(19) The information processing device according to any of (1) to (18),
   in which the detection unit previously records features of a change in a detection value when an operation is performed on the housing, and detects an operation for the housing in response to obtaining the recorded detection value while a user is using the information processing device.
(20) A method of controlling an information processing device, the method including:
   a detection step of detecting an operation performed on a housing of the information processing device worn by a user; and
   a control step of controlling a response operation of the information processing device with respect to a result of the detection.

### Reference Signs List

- 100: information processing device
- 101: housing
- 111 to 113: sound collecting unit
- 120: imaging unit
- 130: voice output unit
- 140: operation unit
- 150: sensor unit
- 160: communication unit
- 170: control unit
- 300: information processing device
- 301: housing
- 302, 303: protrusion portion
- 400: information processing device
- 401: housing
- 402, 403: inclination adjustment portion
- 500: information processing device
- 501: housing
- 600: information processing device
- 601: housing
- 611 to 614: sound collecting unit
- 700: information processing device
- 701: housing
- 800: information processing device
- 801L: housing left portion
- 801R: housing right portion

## Claims

1. An information processing device comprising:
a housing which is worn by a user;
a detection unit which detects an operation performed on the housing; and
a control unit which controls a response operation with respect to a result of the detection.

2. The information processing device according to claim 1,
wherein the detection unit detects a deformation operation of the housing.

3. The information processing device according to claim 1,
wherein the housing has a U-shape, and
the detection unit detects at least one of a closing operation and an opening operation of a U-shaped opening of the housing.

4. The information processing device according to claim 3,
wherein the detection unit detects an operation performed on the housing using at least one of measurement of a distance of a gap of the U-shaped opening of the housing, measurement of movement of at least one tip portion of the opening, and measurement of distortion of the housing.

5. The information processing device according to claim 1,
wherein the detection unit detects an operation of touching the housing.

6. The information processing device according to claim 5,
wherein the housing has a U-shape, and
the detection unit detects an operation of touching at least one of right and left sides of the U-shaped opening of the housing.

7. The information processing device according to claim 5,
wherein the detection unit detects an operation of touching the housing on a basis of a detection result of a proximity sensor or a touch sensor.

8. The information processing device according to claim 5, further comprising:
at least one of a sound collecting unit and an imaging unit,
wherein the detection unit detects an operation of touching a location where the sound collecting unit is disposed in response to a change in sound pressure in the sound collecting unit or detects an operation of touching a location where the imaging unit is disposed in response to a change in luminance in the imaging unit.

9. The information processing device according to claim 1,
wherein the housing has a U-shape, and
the detection unit detects an operation of grasping at least one of the right and left tip portions of the U-shaped opening of the housing.

10. The information processing device according to claim 9, further comprising:
at least one of a sound collecting unit and an imaging unit,
wherein the detection unit detects an operation of grasping a location where the sound collecting unit is disposed in response to a change in sound pressure in the sound collecting unit or detects an operation of grasping a location where the imaging unit is disposed in response to a change in luminance in the imaging unit.

11. The information processing device according to claim 9,
wherein the detection unit detects an operation of touching the housing on a basis of a detection result of a pressure-sensitive sensor.

12. The information processing device according to claim 1,
wherein the detection unit detects an operation of tracing a surface of the housing.

13. The information processing device according to claim 12,
wherein the housing has a U-shape, and
the detection unit detects which one of right and left surfaces of the U-shaped opening of the housing has been traced and detects a tracing direction.

14. The information processing device according to claim 12,
wherein the detection unit detects an operation of tracing the surface of the housing on a basis of a detection result of a touch sensor.

15. The information processing device according to claim 1,
wherein the detection unit detects an operation of shifting a wearing position of the housing.

16. The information processing device according to claim 15,
wherein the detection unit detects an operation of shifting the wearing position of the housing and a shifting direction on a basis of a detection result of an acceleration sensor.

17. The information processing device according to claim 1,
wherein the housing has a U-shape,
the information processing device further comprises operators capable of performing at least one of a rotation operation and a pressing operation on right and left tip portions of the U-shaped opening of the housing, and
the detection unit detects a rotation operation or a pressing operation of the right and left operators.

18. The information processing device according to claim 1,
wherein the housing has a U-shape, and
the detection unit detects extension and contraction operations of right and left tip portions of the U-shaped opening of the housing.

19. The information processing device according to claim 1,
wherein the detection unit previously records features of a change in a detection value when an operation is performed on the housing, and detects an operation for the housing in response to obtaining the recorded detection value while a user is using the information processing device.

20. A method of controlling an information processing device, the method comprising:
a detection step of detecting an operation performed on a housing of the information processing device worn by a user; and
a control step of controlling a response operation of the information processing device with respect to a result of the detection.
